# FASCICULE DE BREVET EUROPEEN

(11) **EP 3 463 006 B1**
(45) Date de publication et mention de la délivrance du brevet: **15.04.2020**
(21) Numéro de dépôt: 17731237.8
(22) Date de dépôt: 30.05.2017
(51) Int. Cl.: A47J 31/40

(54) **DISTRIBUTEUR DE MOUTURE POUR MACHINE A CAFE MUNI D'UNE TURBINE A PALES CURVILIGNES**
MIT EINER TURBINE MIT GEKRÜMMTEN KLINGEN AUSGESTATTETER SPENDER VON GEMAHLENEM KAFFEE FÜR EINE KAFFEEMASCHINE
GROUND COFFEE DISPENSER FOR A COFFEE MACHINE PROVIDED WITH A TURBINE WITH CURVED BLADES

(30) Priorité: 02.06.2016 FR 1655051
(43) Date de publication de la demande: 10.04.2019
(73) Titulaire: SEB S.A., 69130 Ecully (FR)
(72) Inventeur: MORIN, Gilles, 21490 Varois Et Chaignot (FR)
(74) Mandataire: Bourrières, Patrice
(86) Numéro de dépôt international: PCT/FR2017/051350
(87) Numéro de publication internationale: WO 2017/207919

(56) Documents cités:
- WO-A1-2007/051558
- FR-A1- 2 784 567
- US-A- 3 305 139

## Description

L'invention concerne un distributeur de mouture destiné à coopérer avec une machine à café, un tel distributeur de mouture comprenant notamment un réservoir de stockage de mouture et un répartiteur de mouture.

L'invention vise tout particulièrement un distributeur de mouture dont le répartiteur de mouture comporte une ou plusieurs pales et est configuré pour déverser une quantité déterminée de mouture issue du réservoir de stockage vers un porte-filtre agencé sur la machine à café, ledit porte-filtre constituant une zone d'infusion.

L'objectif principal est d'optimiser le distributeur de mouture pour réduire l'encombrement et le coût de fabrication global de la machine à café.

### Etat de la technique

Les machines à café existent depuis de nombreuses années, celles-ci sont très bien connues de l'homme du métier.

Une machine à café comporte traditionnellement un porte-filtre permettant la réception d'un filtre dans lequel est disposée de la mouture de café lors de la préparation de la boisson de café. La machine à café comprend un réservoir d'eau et un système de distribution d'eau chaude configuré pour puiser l'eau du réservoir, chauffer cette eau puis la déverser dans le porte-filtre contenant la mouture de café. L'eau chaude déversée sur la mouture de café permet son infusion, le mélange étant alors filtré pour en extraire la boisson de café, le marc de café restant contenu dans le filtre usagé.

Certaines machines à café sont équipées d'un distributeur de mouture muni d'un réservoir de stockage de café moulu, d'un répartiteur de mouture et d'un dispositif de transfert de la mouture du réservoir de stockage vers le porte-filtre. Ce type de machine à café présente pour avantage d'éviter le stockage du paquet de café moulu entamé dans un lieu de rangement, nécessitant de sortir ledit paquet chaque fois qu'il convient de remplir le porte-filtre pour la préparation d'une boisson de café.

On citera tout particulièrement la demande de brevet publiée sous le numéro FR2682271A1 divulguant une telle machine à café dont le distributeur de mouture comprend un réservoir de stockage de mouture muni d'un contour et d'un fond, et un répartiteur de mouture déversant une quantité déterminée de mouture issue du réservoir de stockage vers la zone d'infusion de la machine à café. Le répartiteur de mouture comporte un disque entraîné en rotation, sur la face inférieure duquel sont fixées quatre pales curvilignes. Le disque présente une périphérie inscrite dans un diamètre D, la quantité de mouture déversée étant définie par un espace périphérique ménagé entre le diamètre D de la périphérie du disque et une paroi interne du contour, à proximité du fond du réservoir de stockage. Chaque pale curviligne présente une extrémité antérieure située à distance de la paroi interne du contour, c'est-à-dire de manière proximale par rapport à l'axe de rotation du disque, et une extrémité postérieure qui s'étend au-delà de la périphérie du disque, dans l'espace périphérique et de manière attenante à la paroi interne du contour. Le répartiteur comprend également un cône agencé au-dessus du disque et solidaire de celui-ci, le cône permettant l'écoulement de la mouture dans l'espace périphérique en minimisant la pression sur la mouture, dans le fond du réservoir de stockage. En outre, le répartiteur comprend un orifice de transfert de la mouture qui est réalisé sur la paroi interne du contour, à proximité du fond du réservoir de stockage.

Cette conception du distributeur de mouture selon le document FR2682271A1 présente plusieurs inconvénients. La configuration des pales a pour incidence de travailler en opposition durant la rotation du disque, en refoulant la mouture de café contre la paroi interne du contour, dans l'espace périphérique. Cela augmente considérablement le tassement de la mouture de café dans l'espace périphérique et les efforts sur les pales curvilignes, ce qui nécessite d'équiper le distributeur de mouture d'un moteur d'entraînement du disque, puissant et donc plus encombrant et onéreux. En outre, la disposition de l'orifice de transfert de la mouture sur la paroi interne du contour impose de déporter le réservoir de stockage par rapport au porte-filtre sur la machine à café, ce qui augmente son encombrement.

La demanderesse a également connaissance de la demande de brevet US2008230568A1 faisant référence au distributeur de mouture décrit dans la demande de brevet FR2682271A1 précitée. Ce document US2008230568A1 porte sur un distributeur de produit en vrac configuré pour écouler en flux continu une quantité dosée dudit produit en vrac, dont la granulométrie est très variable. Le distributeur comprend un conteneur permettant de recevoir le produit en vrac, ledit conteneur comprenant un contour et un fond muni d'un orifice de transfert du produit en vrac. Un disque rotatif est agencé dans le fond du conteneur et présente un diamètre correspondant au diamètre de la paroi interne du contour. Ce disque est muni d'un rebord périphérique et comprend une rampe verticale qui s'étend, en partie, depuis le rebord périphérique et plus ou moins de manière radiale en direction du centre dudit disque. Cette rampe verticale est munie d'une ouverture permettant au produit en vrac d'accéder sous le disque. Ainsi, durant la rotation du disque, le produit en vrac est contraint à pénétrer sous le disque, par l'ouverture. Les dimensions de l'ouverture et la vitesse de rotation du disque permettent de doser le flux de produit en vrac pénétrant sous le disque puis sortant par l'orifice de transfert. Ce disque comprend sous sa face inférieure des pales curvilignes qui s'étendent en direction de l'orifice de transfert disposé au centre sous le disque, et qui sont configurées pour répartir autour du disque le flux de matière en vrac pénétrant par l'ouverture.

Le distributeur de produit en vrac selon US2008230568A1 est conçu pour fonctionner en flux continu et est adapté tout particulièrement pour des applications industrielles de distribution en continu de produit en vrac de granulométrie très variable dans les domaines plasturgique, chimique, agro-alimentaire, cosmétique, ou pharmaceutique, notamment. La rampe verticale sur le disque, agencée plus ou moins dans le sens radial, est en opposition par rapport au produit en vrac durant la rotation du disque, ce qui a pour incidence de générer des efforts importants sur ce disque et, ainsi, de nécessiter l'utilisation d'un moteur puissant pour disposer d'un couple important permettant d'entraîner ce disque, notamment au démarrage. Cette conception du disque n'est pas appropriée pour fonctionner au coup par coup sur une machine à café, avec un démarrage et un arrêt du moteur sur une courte durée lors de chaque transfert de mouture vers le porte-filtre. Cette mise en œuvre permet de doser le débit du produit en vrac sortant en flux continu du conteneur dans le cadre d'un fonctionnement en continu du disque, mais elle n'est pas appropriée pour quantifier précisément le volume de mouture sortant ponctuellement du conteneur, sur des périodes très courtes d'activation du disque.

### Résumé de l'invention

La présente invention a pour objet de mettre en œuvre un distributeur de mouture pour une machine à café qui pallie les inconvénients précités, avec pour finalité l'obtention d'une machine à café compacte et bon marché.

A cet effet, l'invention porte sur un distributeur de mouture destiné à coopérer avec une machine à café. Le distributeur de mouture comprend un réservoir de stockage de mouture muni d'un contour et d'un fond, et un répartiteur de mouture déversant une quantité déterminée de mouture issue du réservoir de stockage vers une zone d'infusion de la machine à café.

Le répartiteur de mouture comporte un disque configuré pour être entraîné en rotation. Au moins une pale curviligne est fixée sur une face inférieure de ce disque. Le disque présente une périphérie inscrite dans un cercle de diamètre D, la quantité de mouture déversée étant définie par un espace périphérique ménagée entre le diamètre D de la périphérie du disque et une paroi interne du contour, à proximité du fond du réservoir de stockage.

En outre, le fond du réservoir de stockage comporte un orifice de transfert de la mouture, agencé sous le disque. La pale curviligne s'étend de la périphérie du disque vers l'intérieur dudit disque, et est incurvée de sorte à transférer la mouture admise par l'espace périphérique vers l'intérieur du disque, jusque dans l'orifice de transfert, lors de la rotation dudit disque.

Ainsi, la conception du distributeur de mouture selon l'invention permet de quantifier précisément la mouture transférée, celle-ci étant définie par la quantité de mouture tombant dans l'espace périphérique entre la périphérie du disque et la paroi interne du contour lors de la rotation du disque. La forme incurvée de l'au moins une pale permet d'accompagner la mouture jusqu'à l'orifice de transfert sans aucune opposition, ce qui réduit considérablement les efforts exercés sur le disque et permet d'utiliser un moteur plus petit, moins puissant et moins onéreux, pour l'entraînement dudit disque.

Avantageusement, l'espace périphérique laissé entre la périphérie du disque et la paroi interne du contour présente une épaisseur comprise entre 0,5 et 2 mm, de préférence entre 0,75 mm et 1,75 mm. Cela évite tout coincement des particules de café moulu entre le disque et la paroi interne.

De préférence, le disque comporte entre sa périphérie et le cercle de diamètre D une zone d'admission complémentaire de mouture agencée en amont de la pale curviligne, par rapport au sens de rotation du disque. En outre, la zone d'admission complémentaire présente une épaisseur qui augmente au fur et à mesure que l'on se rapproche de la pale curviligne. Cela contribue également à éviter tout risque de coincement dû à la granulométrie des particules de café moulu.

Avantageusement, le disque comporte un rebord périphérique tombant disposé en vis-à-vis de la paroi interne. En outre, le rebord périphérique comporte au moins une ouverture située en amont de la pale curviligne, par rapport au sens de rotation du disque. Cela permet de définir précisément la zone d'introduction de la mouture de café sous le disque, au niveau de la périphérie dudit disque, juste en aval de l'extrémité distale de la pale attenante audit bord périphérique.

Selon une mise en œuvre avantageuse du distributeur de mouture, le disque est prolongé en partie supérieure par un corps creux en forme de cloche, le rebord périphérique précité formant une partie inférieure dudit disque. Cette conception permet la mise en œuvre d'une seule pièce monobloc et creuse, cette forme creuse évitant tout risque de tassement de la mouture sous le disque. Ainsi on préserve un écoulement convenable de la mouture sous le disque et au travers de l'orifice de transfert sur le fond du conteneur. En outre, cette forme en cloche favorise la descente convenable de la mouture de café dans le réservoir de stockage en direction de l'espace périphérique existant entre le rebord périphérique et la paroi interne du contour. Cette forme en cloche permet en outre la mise en œuvre d'une extrémité supérieure configurée pour avoir une prise en main aisée de la pièce, afin de l'extraire facilement du réservoir de stockage pour procéder à son entretien. Des variantes pourraient être envisagées, par exemple une forme en cône creux en remplacement de la forme en cloche. On pourrait également prévoir un disque et une cloche qui sont fixés ensemble, plutôt que d'être constitués d'une pièce monobloc.

De préférence, selon cette mise en œuvre précitée du distributeur de mouture, le corps comporte au moins une première nervure agencée en périphérie de manière attenante à la partie supérieure du disque, plus ou moins à l'aplomb de la pale curviligne, c'est-à-dire dans l'alignement de la pale. La première nervure aura de préférence également une forme curviligne orientée dans le sens de la rotation du disque, afin de réduire les efforts exercés sur celui-ci durant sa rotation. Ces premières nervures évitent à la mouture de se figer et rester statique dans le réservoir de stockage, ce qui favorise la descente de la mouture dans l'espace périphérique. La forme curviligne de la première nervure favorise également la descente de la mouture dans l'espace périphérique.

Avantageusement, le disque comporte un organe de raclage du fond du réservoir de stockage et de nettoyage de l'orifice de transfert. Cet organe de raclage contribue également à empêcher le tassement de la mouture sous le disque, pour un écoulement convenable de celui-ci. De préférence, cet organe de raclage est souple, par exemple en matière élastomère, mais on pourrait envisager une variante d'organe rigide.

De préférence, le disque est entraîné en rotation par un moteur. De préférence, le disque est entrainé en rotation selon un axe vertical, le moteur étant agencé au centre du disque selon l'axe vertical. En effet, les caractéristiques techniques du distributeur de mouture, telles que précitées, permettent avantageusement une réduction considérable du couple et, ainsi, l'utilisation d'un moteur beaucoup moins puissant et plus compact, ce qui permet avantageusement de l'introduire directement dans l'axe de rotation du disque, notamment sous la forme en cloche précitée. Il n'est donc pas nécessaire de déporter le moteur à cause de sa taille et d'utiliser un système de transmission agencé entre ce moteur et le disque.

Avantageusement, celui-ci comprend un dispositif de transfert qui comporte un organe d'ouverture et de fermeture de l'orifice de transfert, mobile entre une position d'ouverture et de fermeture. L'organe mobile d'ouverture et de fermeture de l'orifice de transfert est entrainé par un levier de manœuvre et un système de transmission.

De préférence, le distributeur comprend des moyens de commande configurés pour assurer la mise en route du moteur d'entrainement du disque lors de l'activation du levier de manœuvre précité. On peut cependant envisager une commande indépendante du moteur, après avoir préalablement activé le levier de manœuvre.

Avantageusement, la paroi interne du contour du réservoir de stockage comprend au moins une seconde nervure s'étendant au moins sur une partie de sa hauteur à proximité de l'espace périphérique. La présence de ces secondes nervures favorise la descente de la mouture de café dans le réservoir de stockage et empêche ladite mouture de tourner avec le disque dans ledit réservoir de stockage.

L'invention concerne également une machine à café comportant un distributeur de mouture qui présente l'une et/ou l'autre des caractéristiques précitées.

### Brève description des figures

Les caractéristiques et avantages de l'invention apparaîtront à la lecture de la description suivante d'un mode de réalisation préférentiel et non limitatif d'une machine à café équipée d'un distributeur de mouture, s'appuyant sur des figures parmi lesquelles :
- Les figures 1 et 2 illustrent la machine à café dans deux positions d'un organe de manœuvre correspondant respectivement à l'obturation de l'orifice transfert entre le réservoir de stockage et le porte-filtre et, à l'ouverture de l'orifice transfert pour le transfert de la mouture du réservoir de stockage vers la zone d'infusion, durant la rotation du disque ;
- La figure 3 illustre la machine à café en coupe afin de mettre en évidence certains de ses éléments ;
- La figure 4 illustre en coupe le distributeur de mouture agencé sur la machine à café ;
- La figure 5 illustre en vue de dessus le réservoir de stockage mettant en évidence l'orifice de transfert dans le fond et l'obturation de cet orifice de transfert par un organe d'ouverture et de fermeture ;
- La figure 6 illustre une vue d'ensemble d'une turbine constituée du disque avec une partie supérieure en forme de cloche et une partie inférieure présentant un rebord périphérique ;
- La figure 7 illustre en vue de dessus la turbine de la figure 6 en position dans le réservoir de stockage ;
- La figure 8 illustre la turbine de la figure 6 en vue de dessous, mettant en évidence les pales incurvées ;
- La figure 9 illustre en vue de dessous le réservoir de stockage avec un organe d'ouverture et de fermeture de l'orifice de transfert en position fermée ;
- La figure 10 illustre en vue de dessous le réservoir de stockage avec un organe d'ouverture et de fermeture de l'orifice de transfert en position ouverte ;
- Les figures 11 et 12 illustrent l'organe d'ouverture et de fermeture de l'orifice de transfert et un levier de commande de cet organe, respectivement en position fermée et en position ouverte.

### Description détaillée

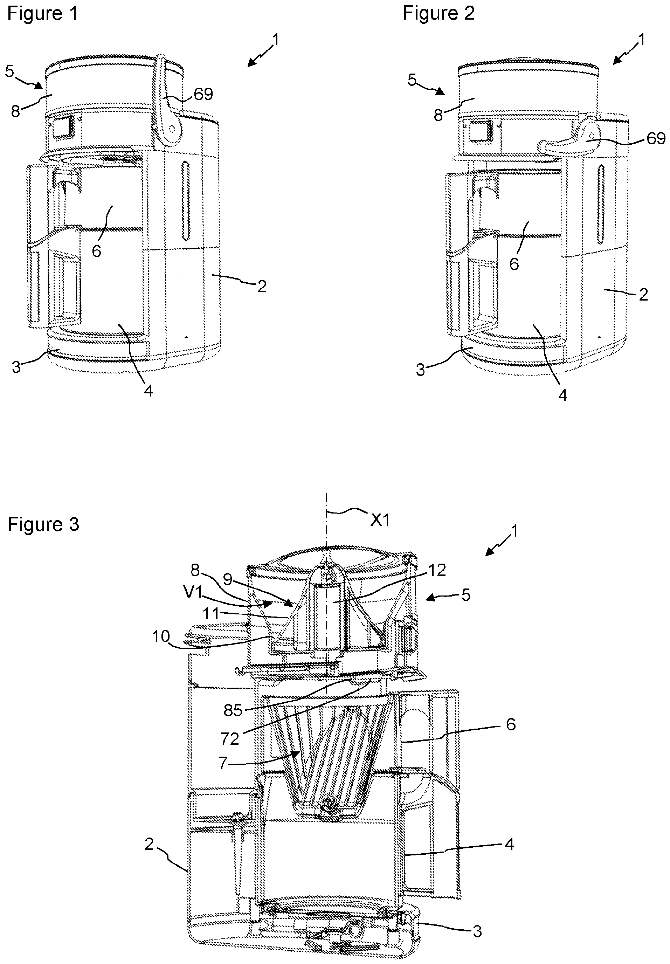

Les figures 1 à 3 montrent la machine à café 1 selon l'invention, dans un mode préféré de conception. Le terme « machine 1 » est utilisé dans la suite de la description pour définir ladite machine à café 1.

La machine 1 comprend traditionnellement un corps 2 muni d'une base chauffante 3 configurée pour réceptionner une verseuse 4 dans laquelle est déversée la boisson de café (non illustrée). La machine 1 comprend un distributeur de mouture 5 agencé au-dessus d'un porte-filtre 6, le porte-filtre définissant une zone d'infusion 7.

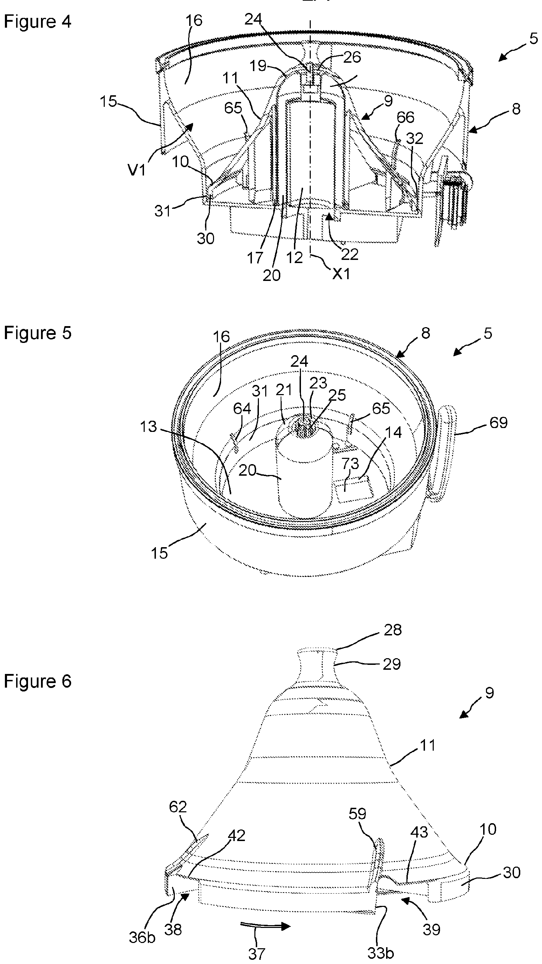

Le distributeur de mouture 5 comprend un réservoir de stockage 8 définissant un volume V1 permettant la réception d'une certaine quantité de café moulu, par exemple l'équivalent d'un paquet de 250 grammes de café moulu, que l'on trouve généralement en vente dans le commerce. Ce réservoir de stockage 8 intègre une turbine 9 qui est creuse et qui comprend un disque 10 à sa partie inférieure, ledit disque 10 étant prolongé vers le haut par un corps 11 plus ou moins en forme de cloche. Cette turbine 9 est entraînée en rotation selon un premier axe X1 vertical au moyen d'un moteur 12 agencé selon cet axe X1 à l'intérieur du corps 11, comme l'illustrent les figures 3 et 4. On constate sur les figures 1 à 3 que le réservoir de stockage 8 est agencé dans le même axe vertical que le porte-filtre 6 et que la verseuse 4, en l'occurrence l'axe X1.

Tel qu'illustré en figure 5, le réservoir de stockage 8 comprend un fond 13 muni d'un orifice de transfert 14 ayant une forme carrée, d'autres formes restant envisageables. Cet orifice de transfert 14 permet le passage de la mouture de café dudit réservoir de stockage 8 vers la zone d'infusion 7 du porte-filtre 6. Le réservoir de stockage 8 comprend un contour 15 cylindrique qui dispose d'une paroi interne 16.

Tel qu'illustré en regard des figures 3 à 5 et 8, la turbine 9 est creuse et comporte une portion tubulaire interne 17 qui définit un premier logement 18 dont le fond 19 est fuselé. Le réservoir de stockage 8 comprend une pièce tubulaire 20 agencée selon l'axe X1 et comprenant une extrémité fuselée 21. La pièce tubulaire 20 est de forme complémentaire au premier logement 18, pour être insérée dans celui-ci. Cette pièce tubulaire 20 définit un second logement 22 permettant la réception du moteur 12. Le fond 21 de la pièce tubulaire 20 comprend un trou débouchant 23 permettant le passage de l'arbre de rotation 24 du moteur 12 lorsque ce dernier est positionné dans le second logement 22. Cet arbre de rotation 24 comprend des dents 25. Le fond 19 du premier logement 18 comprend un plot creux 26 muni d'une denture interne 27, ce plot creux 26 venant se loger dans le trou débouchant 23 et engrenant avec l'arbre de rotation 24 lorsque la portion tubulaire interne 17 est emboitée sur la pièce tubulaire 20.

Le corps 11 en forme de cloche prolonge le disque 10 sur la partie supérieure de la turbine 9, et forme une seule et même pièce avec celui-ci. Tel qu'illustré notamment en figure 6, l'extrémité supérieure 28 du corps 11 comprend une gorge circulaire 29, ce qui facilite la manipulation de la turbine 9 lors de son positionnement dans le réservoir de stockage 8 ou lors de son retrait de celui-ci.

Tel qu'illustré en regard des figures 4 à 8, lorsque la turbine 9 est engagée dans le réservoir de stockage 8, le disque 10 est positionné au-dessus du fond 13 et de l'orifice de transfert 14. Ce disque 10 comprend dans sa partie inférieure un rebord périphérique 30 tombant qui est disposé en regard du bord périphérique inférieur 31 de la paroi interne 16 du contour 15, avec un espace périphérique 32 entre lesdits éléments définissant un jeu périphérique. La quantité de mouture déversée au travers de l'orifice de transfert 14 est définie par cet espace périphérique 32 à proximité du fond 13 du réservoir de stockage 8.

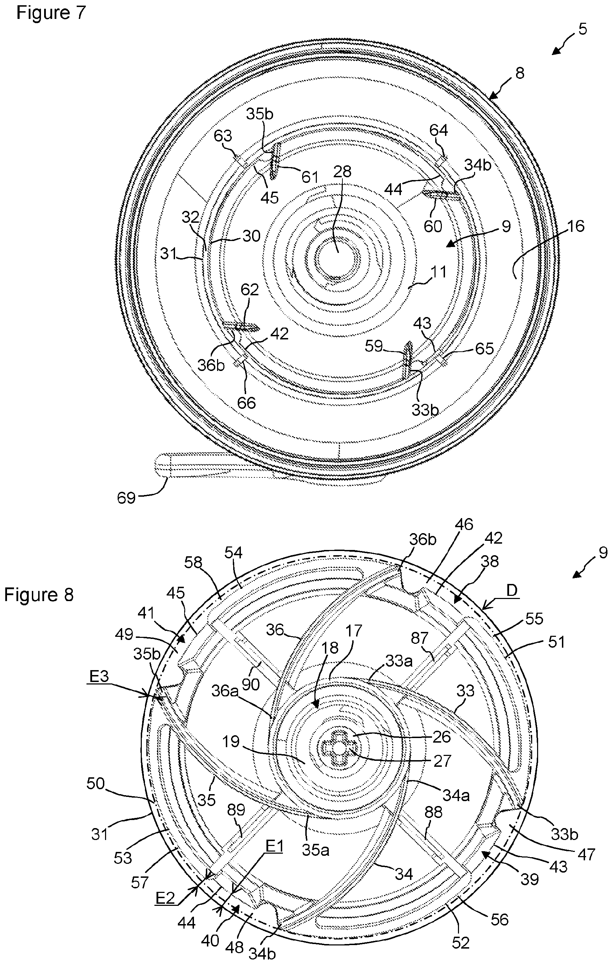

Tel qu'illustré en figure 8, le disque 10 comprend sur sa face inférieure quatre pales 33-36 qui présentent chacune une forme incurvée. Les extrémités proximales 33a-36a de ces pales 33-36 sont solidaires de la portion tubulaire interne 17 de la turbine 9. Les extrémités distales 33b-36b des pales 33-36 débouchent sur le rebord périphérique 30. Les extrémités distales 33b-36b sont disposées en aval par rapport aux extrémités proximales, en tenant compte du sens de rotation de la turbine 9 schématisé par la flèche 37. Quatre ouvertures 38-41 sont ménagées sur le rebord périphérique 30 respectivement en aval des extrémités distales 33b-36b des quatre pales 33-36. Au niveau de ces quatre ouvertures 38-41, le disque 10 comprend quatre encoches 42-45 définissant des décrochements par rapport au rebord périphérique 30, ce qui permet de constituer quatre zones d'admission principales 46-49 assurant la descente de la mouture de café dans l'espace périphérique 32.

Tel qu'illustré en figure 8, le rebord périphérique 30 du disque 10 est inscrit dans un cercle 50 de diamètre D. En outre, le diamètre du rebord périphérique 30 décroit légèrement entre chaque portion 51-54 délimitée par deux extrémités distales 33b-36b de deux pales 33-36, au fur et à mesure que l'on s'approche de l'extrémité distale de la pale postérieure, tenant compte du sens de rotation. Ces portions 51-54 sont disposées respectivement en aval des quatre encoches 42-45. Le rebord périphérique 30 décroissant permet de constituer quatre zones d'admission complémentaires 55-58 de la mouture disposées respectivement en aval des quatre zones d'admission principales, dans l'espace périphérique 32.

De préférence, comme illustré en figure 8, la zone d'admission principale 46-49 présentant une épaisseur E1 constante entre l'encoche 42-45 sur le disque 10 et le bord périphérique inférieur 31 de la paroi interne 16 du contour 15, qui est comprise entre 2 mm et 2,5 mm, de préférence égale à 2,25 mm.

De même, comme illustré en figure 8, la zone d'admission complémentaire 55-58 comprend une épaisseur entre la portion 51-54 sur le disque 10 et le bord périphérique inférieur 31 de la paroi interne 16 du contour 15 qui augmente au fur et à mesure entre deux pales 33-36, cette épaisseur étant minimale E2 et comprise entre 0,5 mm et 1 mm, de préférence 0,75 mm, au niveau de la pale avale, et maximale E3 et comprise entre 1,5 mm et 2 mm, de préférence 1,75 mm, au niveau de la pale amont.

L'orifice de transfert 14 sur le fond 13 du réservoir de stockage 8 est positionné en-dessous du disque 10. Les pales 33-36 s'étendent depuis le bord périphérique 30 jusqu'à l'orifice de transfert 14, et au-delà, ce qui permet d'acheminer vers l'intérieur du disque 10 la mouture admise par l'espace périphérique 32, jusqu'à ce que cette mouture atteigne l'orifice de transfert 14, durant la rotation du disque 10.

Tel que l'illustrent les figures 6 et 7, la turbine 9 comprend des premières nervures 59-62 qui présentent une forme légèrement incurvées et s'étendent en partie supérieure du disque 10, à l'aplomb des extrémités distales 33b-36b des pales 33-36. Ces premières nervures 59-62 favorisent la descente de la mouture vers le fond 13 du réservoir de stockage 8, dans l'espace périphérique 32, durant la rotation de la turbine 9.

Tel que l'illustrent les figures 4, 5 et 7, la paroi interne 16 du contour 15 comporte des secondes nervures 63-66 réparties uniformément et s'étendant en partie vers le haut depuis le bord périphérique inférieur 31. Ces secondes nervures 63-66 évitent que la mouture de café disposée dans le réservoir de stockage 8 tourne avec la turbine 9, ce qui favorise la descente de cette mouture dans l'espace périphérique 32.

Le distributeur de mouture 5 comprend un dispositif de transfert 67 qui permet de dégager l'orifice de transfert 14, dans une position ouverte, et d'obturer ledit orifice de transfert 14, dans une position fermée. En position ouverte, l'acheminement de la mouture de café vers l'orifice de transfert 14 durant la rotation du disque 10 permet son extraction du réservoir de stockage 8 et son transfert vers le porte-filtre 6.

Ce dispositif de transferts 67, illustré en figures 5 et 9 à 12, comprend un organe d'ouverture et de fermeture 68 qui est actionné au moyen d'un levier de manœuvre 69 agissant sur un système de transmission 70.

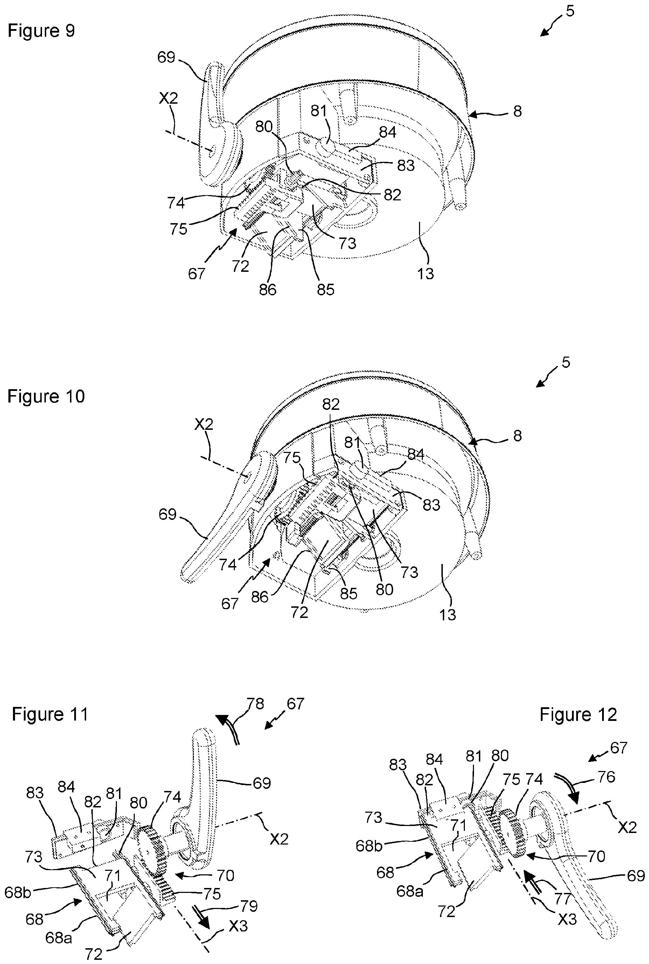

L'organe d'ouverture et de fermeture 68 comporte une première partie 68a définissant une ouverture 71 et une paroi inclinée 72 s'étendant en-dessous de cette ouverture 71, comme l'illustrent notamment les figures 11 et 12. Cet organe d'ouverture et de fermeture 68 comprend également une seconde partie 68b disposée dans le prolongement de la première partie 68a et définissant une paroi horizontale 73.

Le système de transmission 70 est un système pignon 74 et crémaillère 75. Le levier de manœuvre 69 est monté à pivotement selon un second axe X2 horizontal, sur le réservoir de stockage 8, comme l'illustrent notamment les figures 9 à 12. Le pignon 74 est assujetti au levier de manœuvre 69 et tourne selon cet axe X2 lors de l'actionnement dudit levier de manœuvre 69. Ce pignon 74 engrène avec la crémaillère 75, la rotation du pignon 74 dans un sens ou dans l'autre entrainant la translation de la crémaillère 75 respectivement dans un sens ou dans l'autre, selon un troisième axe X3 horizontal illustré en figures 11 et 12. L'organe d'ouverture et de fermeture 68 est monté en liaison glissière vis-à-vis du réservoir de stockage 8, selon ce troisième axe X3. Cet organe d'ouverture et de fermeture 68 est assujetti à la crémaillère 75. Ainsi, comme l'illustre la figure 12, l'actionnement en rotation du levier de manœuvre 69 dans le sens de la première flèche 76 selon le second axe X2, entraîne une translation de l'organe d'ouverture et de fermeture 68 dans le sens de la seconde flèche 77 selon le troisième axe X3. Inversement, comme l'illustre la figure 11, l'actionnement en rotation du levier de manœuvre 69 dans le sens de la troisième flèche 78 selon le second axe X2, entraîne une translation de l'organe d'ouverture et de fermeture 68 dans le sens de la quatrième flèche 79 selon le troisième axe X3.

Lorsque le levier de manœuvre 69 est en position verticale vers le haut, comme l'illustre les figures 1, 5, 9 et 11, la paroi horizontale 73 obture l'orifice 14. Inversement, lorsque le levier de manœuvre 69 est en position horizontale vers l'avant, comme l'illustre les figures 2, 10 et 12, l'ouverture 71 et la paroi inclinée 72 sont positionnées sous l'orifice de transfert 14, ce qui libère cet orifice de transfert 14 et autorise l'écoulement de la mouture de café du réservoir de stockage 8 vers le porte-filtre 6.

Un ressort (non illustré) est monté entre un plot 80 qui s'emboîte sur une première extrémité du ressort et un logement 81 qui réceptionne une seconde extrémité du ressort. Le plot 80 est agencé à l'extrémité arrière 82 de l'organe d'ouverture et de fermeture 68 et le logement 81 est agencé sur un rebord 83 du réservoir de stockage 8, comme l'illustrent les figures 9 à 12. Lorsque l'extrémité arrière 82 de l'organe d'ouverture et de fermeture 68 est en appui contre le rebord 83, dans la position d'ouverture correspondant à l'actionnement du levier de manœuvre 69 vers sa position horizontale avant, tel qu'illustré en figures 2, 10 et 12, le ressort (non illustré) est comprimé entre le plot 80 et le logement 81. Lorsque le levier de manœuvre 69 est lâché, le ressort se détend et assure le retour en position de l'organe d'ouverture et de fermeture 68 en position fermée, lequel se déplace alors dans le sens de la quatrième flèche 79, ce qui fait pivoter ledit levier de manœuvre 69 dans le sens de la troisième flèche 78 et le ramène en position verticale vers le haut, illustrée notamment en figures 9 et 11.

Tel qu'illustré en figures 9 et 12, la machine 1 comprend un capteur 84 agencé sur le rebord 83, par exemple un switch, qui est activé lorsque l'extrémité arrière 82 de l'organe d'ouverture et de fermeture 68 vient contre le rebord 83, c'est-à-dire dans la position ouverte selon laquelle l'ouverture 71 et la paroi inclinée 72 sont disposées sous l'orifice de transfert 14. L'activation du capteur 84 entraîne le mise en marche du moteur 12 et la rotation de la turbine 9, ce qui permet au disque 10 de pousser la mouture de café au travers de l'orifice de transfert 14 et de l'ouverture 71, ladite mouture étant alors guidée par la pente de la paroi inclinée 72 durant sa chute dans le porte-filtre 6. La paroi inclinée 72 est orientée de manière à guider la mouture de café vers le centre du porte-filtre 6, comme l'illustre notamment la figure 3.

Le réservoir de stockage 8 comprend en-dessous de son fond 13 un organe de nettoyage se présentant sous la forme d'une paroi verticale 85 munie d'un pan incliné 86 disposant d'une pente identique à celle de la paroi inclinée 72, comme l'illustrent les figures 9 et 10. Le pan incliné 86 est attenant à la paroi inclinée 72, de sorte à racler ladite paroi inclinée 72 durant le déplacement de l'organe d'ouverture et de fermeture 68 de la position ouverte à la position fermée, et inversement. Le nettoyage régulier de la paroi inclinée 72 évite l'accumulation de mouture de café sur celle-ci, due notamment à l'humidité présente du fait de la vapeur et de la condensation. Cela permet de doser précisément la mouture de café tombant dans le porte-filtre 6, à chaque activation du levier de manœuvre 69.

Tel qu'illustré en figure 8, le disque 10 comprend sur sa face inférieure quatre organes de raclage 87-90 qui sont au contact du fond 13 du réservoir de stockage 8 et balayent celui-ci et l'orifice de transfert 14 durant la rotation de la turbine 9.

Ces organes de raclage 87-90 sont réalisés dans un matériau souple, notamment un élastomère.

La description précédente d'un mode préférentiel de conception n'a pas un caractère limitatif. Cette mise en œuvre préférentielle du distributeur de mouture 5 sur la machine 1 permet avantageusement de simplifier sa conception et son coût de fabrication en utilisant un moteur 12 de faible puissance et compact.

De nombreuses variantes restent toutefois envisageables, notamment quant à la conception du disque 10. On pourrait notamment prévoir un disque 10 avec un rebord périphérique 30 présentant un diamètre constant et égal au diamètre D du cercle 50, sans aucune décroissance entre deux extrémités distales 33b-36b de pales 33-36, dans quel cas la zone d'admission complémentaire 55-58 n'existerait pas et l'épaisseur de l'espace périphérique 32 entre chaque portion 51-54 sur le disque 10 et le bord périphérique inférieur 31 de la paroi interne 16 du contour 15 serait constante, cette épaisseur correspondant à l'épaisseur minimale E2 comprise entre 0,5 mm et 1 mm, de préférence 0,75 mm.

On pourrait également prévoir des variantes de dispositif de transfert 67, sans sortir du cadre de l'invention.

## Revendications

1. Distributeur de mouture (5) destiné à coopérer avec une machine à café (1), lequel comprend un réservoir de stockage (8) de mouture muni d'un contour (15) et d'un fond (13) et un répartiteur de mouture (9) déversant une quantité déterminée de mouture issue du réservoir de stockage vers une zone d'infusion (7) de la machine à café, le répartiteur de mouture (9) comportant un disque (10) entraîné en rotation sur lequel au moins une pale (33-36) curviligne est fixée sur une face inférieure dudit disque (10), le disque (10) présentant une périphérie (30) inscrite dans un diamètre (D), le fond (13) du réservoir de stockage (8) comportant un orifice de transfert (14) de la mouture agencé sous le disque (10) et la pale curviligne (33-36) s'étend de la périphérie (30) vers l'intérieur du disque (10) pour transférer la mouture admise par un espace périphérique (32) dans l'orifice de transfert (14) lors de la rotation du disque (10), **caractérisé en ce que** la quantité de mouture déversée est définie par l'espace périphérique (32) ménagé entre le diamètre (D) de la périphérie du disque (10) et une paroi interne (16) du contour (15), à proximité du fond (13) du réservoir de stockage (8) et **en ce que** le disque (10) est prolongé en partie supérieure par un corps (11) en forme de cloche, le rebord périphérique (30) formant une partie inférieure dudit disque.

2. Distributeur de mouture (5) selon la revendication 1, **caractérisé en ce que** l'espace périphérique (32) laissé entre la périphérie (30) du disque (10) et la paroi interne (16) du contour (15) présente une épaisseur (E2, E3) comprise entre 0,5 et 2 mm, de préférence entre 0,75 mm et 1,75 mm.

3. Distributeur de mouture (5) selon l'une des revendications 1 ou 2, **caractérisé en ce que** le disque (10) comporte entre la périphérie et le diamètre (D) une zone d'admission complémentaire (55-58) de mouture agencée en amont de la pale curviligne (33-36), par rapport au sens de rotation du disque (10), la zone d'admission complémentaire (55-58) présentant une épaisseur qui augmente au fur et à mesure que l'on se rapproche de la pale curviligne.

4. Distributeur de mouture (5) selon l'une des revendications 1 à 3, **caractérisé en ce que** le disque (10) comporte un rebord périphérique (30) tombant disposé en vis-à-vis de la paroi interne (31), le rebord périphérique (30) comportant au moins une ouverture (38-41) située en amont de l'au moins une pale curviligne (33-36), par rapport au sens de rotation du disque (10).

5. Distributeur de mouture (5) selon l'une des revendications 1 à 4, **caractérisé en ce que** le corps (11) comporte au moins une première nervure (59-62) agencée en périphérie, à l'aplomb de la pale curviligne (33-36).

6. Distributeur de mouture (5) selon l'une des revendications 1 à 5, **caractérisé en ce que** le disque (10) comporte un organe de raclage (87-90) du fond (13) du réservoir de stockage (8) et de nettoyage de l'orifice de transfert (14).

7. Distributeur de mouture (5) selon la revendication 6, **caractérisé en ce que** l'organe de raclage (87-90) est souple.

8. Distributeur de mouture (5) selon l'une des revendications 1 à 7, **caractérisé en ce que** le disque (10) est entraîné en rotation par un moteur (12).

9. Distributeur de mouture (5) selon la revendication 8, **caractérisé en ce que** le disque (10) est entrainé en rotation selon un axe vertical (X1), le moteur (12) étant agencé au centre du disque (10) selon l'axe vertical.

10. Distributeur de mouture (5) selon l'une des revendications 1 à 9, **caractérisé en ce qu'**il comprend un dispositif de transfert (67) qui comporte un organe d'ouverture et de fermeture (68) de l'orifice de transfert (14) mobile entre une position d'ouverture et une position de fermeture, l'organe d'ouverture et de fermeture (68) étant entrainé par un levier de manœuvre (69) et un système de transmission (70).

11. Distributeur de mouture (5) selon la revendication 10, **caractérisé en ce que** des moyens de commande (84) sont configurés pour assurer la mise en route d'un moteur (12) d'entrainement du disque (10) lors de l'activation du levier de manœuvre (69).

12. Distributeur de mouture (5) selon l'une des revendications 1 à 11, **caractérisé en ce que** la paroi interne (16) comprend au moins une seconde nervure (63-66) s'étendant au moins sur sa hauteur à proximité de l'espace périphérique (32).

13. Machine à café (1) comportant un distributeur de mouture (5) selon l'une quelconque des revendications précédentes.

## Patentansprüche

1. Mahlgutspender (5), der dazu bestimmt ist, mit einer Kaffeemaschine (1) zusammenzuarbeiten, der einen Mahlgutlagerbehälter (8) umfasst, der mit einer Einfassung (15) und einem Boden (13) versehen ist, und einen Mahlgutverteiler (9), der eine bestimmte Mahlgutmenge, die aus dem Lagerbehälter stammt, zu einer Brühzone (7) der Kaffeemaschine schüttet, wobei der Mahlgutverteiler (9) eine Scheibe (10) umfasst, die in Drehung angetrieben ist, auf der mindestens ein krummliniges Schaufelblatt (33 - 36) auf einer unteren Fläche der Scheibe (10) befestigt ist, wobei die Scheibe (10) einen Umfang (30) aufweist, der in einen Durchmesser (D) fällt, wobei der Boden (13) des Lagerbehälters (8) eine Transferöffnung (14) des Mahlguts umfasst, die unter der Scheibe (10) angeordnet ist und sich das krummlinige Schaufelblatt (33 - 36) von einem Umfang (30) zu dem Inneren der Scheibe (10) erstreckt, um das Mahlgut, das durch einen Umfangsraum (32) in die Transferöffnung (14) bei der Drehung der Scheibe (10) zu transferieren, **dadurch gekennzeichnet, dass** die geschüttete Mahlgutmenge durch den Umfangsraum (32) definiert ist, der zwischen dem Durchmesser (D) des Umfangs der Scheibe (10) und einer Innenwand (16) der Einfassung (15) in der Nähe des Bodens (13) des Lagerbehälters (8) eingerichtet ist, und dass die Scheibe (10) in dem oberen Teil durch einen Körper (11) in Glockenform verlängert ist, wobei der Umfangsrand (30) einen unteren Teil der Scheibe bildet.

2. Mahlgutspender (5) nach Anspruch 1, **dadurch gekennzeichnet, dass** der Umfangsraum (32), der zwischen dem Umfang (30) der Scheibe (10) und der Innenwand (16) der Einfassung (15) belassen ist, eine Stärke (E2, E3) aufweist, die zwischen 0,5 und 2 mm liegt, vorzugsweise zwischen 0,75 mm und 1,75 mm.

3. Mahlgutspender (5) nach einem der Ansprüche 1 oder 2, **dadurch gekennzeichnet, dass** die Scheibe (10) zwischen dem Umfang und dem Durchmesser (D) eine ergänzende Mahlguteinlasszone (55 - 58) umfasst, die stromaufwärts des krummlinigen Schaufelblatts (33 - 36) in Bezug auf die Drehrichtung (10) eingerichtet ist, wobei die ergänzende Mahlguteinlasszone (55 - 58) eine Stärke aufweist, die allmählich beim Nähern an das krummlinige Schaufelblatt zunimmt.

4. Mahlgutspender (5) nach einem der Ansprüche 1 bis 3, **dadurch gekennzeichnet, dass** die Scheibe (10) einen abfallenden Umfangsrand (30) umfasst, der in Gegenüberlage zu der Innenwand (31) angeordnet ist, wobei der Umfangsrand (30) mindestens eine Öffnung (38 - 41) umfasst, die stromaufwärts des mindestens einen krummlinigen Schaufelblatts (33 - 36) in Bezug auf die Drehrichtung der Scheibe (10) liegt.

5. Mahlgutspender (5) nach einem der Ansprüche 1 bis 4, **dadurch gekennzeichnet, dass** der Körper (11) mindestens eine erste Rippe (59-62) umfasst, die an dem Umfang in der Lotrechten zu dem krummlinigen Schaufelblatt (33 - 36) eingerichtet ist.

6. Mahlgutspender (5) nach einem der Ansprüche 1 bis 5, **dadurch gekennzeichnet, dass** die Scheibe (10) ein Abschabeorgan (87 - 90) des Bodens (13) des Lagerbehälters (8) und zum Reinigen der Transferöffnung (14) umfasst.

7. Mahlgutspender (5) nach Anspruch 6, **dadurch gekennzeichnet, dass** das Abschabeorgan (87 - 90) biegsam ist.

8. Mahlgutspender (5) nach einem der Ansprüche 1 bis 7, **dadurch gekennzeichnet, dass** die Scheibe (10) in Drehung von einem Motor (12) angetrieben ist.

9. Mahlgutspender (5) nach Anspruch 8, **dadurch gekennzeichnet, dass** die Scheibe (10) in Drehung entlang einer vertikalen Achse (X1) angetrieben ist, wobei der Motor (12) in der Mitte der Scheibe (10) entlang der vertikalen Achse eingerichtet ist.

10. Mahlgutspender (5) nach einem der Ansprüche 1 bis 9, **dadurch gekennzeichnet, dass** er eine Transfervorrichtung (67) umfasst, die ein Öffnungs- und Schließorgan (68) der Transferöffnung (14) umfasst, das zwischen einer Öffnungsposition und einer Schließposition beweglich ist, wobei das Öffnungs- und Schließorgan (68) von einem Betätigungshebel (69) und einem Getriebesystem (70) angetrieben ist.

11. Mahlgutspender (5) nach Anspruch 10, **dadurch gekennzeichnet, dass** die Steuermittel (84) konfiguriert sind, um das Inbetriebsetzen eines Antriebsmotors (12) der Scheibe (10) bei dem Betätigen des Betätigungshebels (69) sicherzustellen.

12. Mahlgutspender (5) nach einem der Ansprüche 1 bis 11, **dadurch gekennzeichnet, dass** die Innenwand (16) mindestens eine zweite Rippe (63 - 66) umfasst, die sich mindestens auf ihrer Höhe in der Nähe des Umfangsraums (32) erstreckt.

13. Kaffeemaschine (1), die einen Mahlgutspender (5) nach einem der vorstehenden Ansprüche umfasst.

## Claims

1. Ground coffee dispenser (5) intended to cooperate with a coffee machine (1), which comprises a ground coffee storage reservoir (8) provided with a contour (15) and a bottom (13) and a ground coffee distributor (9) pouring a predefined quantity of ground coffee from the storage reservoir into a brewing area (7) of the coffee machine, the ground coffee distributor (9) comprising a disc (10) driven in rotation on which at least one curved blade (33-36) is attached onto a lower face of said disc (10), the disc (10) having a periphery (30) inscribed in a diameter (D), the bottom (13) of the storage reservoir (8) comprising an opening for transferring (14) the ground coffee arranged under the disc (10) and the curved blade (33-36) extends from the periphery (30) towards the inside of the disc (10) to transfer the ground coffee admitted by a peripheral space (32) into the transfer opening (14) when the disc (10) rotates, **characterised in that** the quantity of ground coffee poured is defined by the peripheral space (32) arranged between the diameter (D) of the periphery of the disc (10) and an inner wall (16) of the contour (15), close to the bottom (13) of the storage reservoir (8) and **in that** the disc (10) is extended in the upper portion by a body (11) in the shape of a bell, with the peripheral edge (30) forming a lower portion of said disc.

2. Ground coffee dispenser (5) according to claim 1, **characterised in that** the peripheral space (32) left between the periphery (30) of the disc (10) and the inner wall (16) of the contour (15) has a thickness (E2, E3) comprised between 0.5 and 2 mm, preferably between 0.75 mm and 1.75 mm.

3. Ground coffee dispenser (5) according to one of claims 1 or 2, **characterised in that** the disc (10) comprises between the periphery and the diameter (D) an additional intake zone (55-58) of ground coffee arranged upstream from the curved blade (33-36), in relation to the direction of rotation of the disc (10), the additional intake zone (55-58) having a thickness that increases as the curved blade is approached.

4. Ground coffee dispenser (5) according to one of claims 1 to 3, **characterised in that** the disc (10) comprises a falling peripheral edge (30) disposed facing the inner wall (31), with the peripheral edge (30) comprising at least one opening (38-41) located upstream from the at least one curved blade (33-36), with respect to the direction of rotation of the disc (10).

5. Ground coffee dispenser (5) according to one of claims 1 to 4, **characterised in that** the body (11) comprises at least one first rib (59-62) arranged at the periphery, in line with the curved blade (33-36).

6. Ground coffee dispenser (5) according to one of claims 1 to 5, **characterised in that** the disc (10) comprises a member for scraping (87-90) the bottom (13) of the storage reservoir (8) and for cleaning the transfer opening (14).

7. Ground coffee dispenser (5) according to claim 6, **characterised in that** the member for scraping (87-90) is flexible.

8. Ground coffee dispenser (5) according to one of claims 1 to 7, **characterised in that** the disc (10) is driven in rotation by a motor (12).

9. Ground coffee dispenser (5) according to claim 8, **characterised in that** the disc (10) is driven in rotation along a vertical axis (X1), the motor (12) being arranged at the centre of the disc (10) according to the vertical axis.

10. Ground coffee dispenser (5) according to one of claims 1 to 9, **characterised in that** it comprises a device for transferring (67) that comprises a member for opening and for closing (68) the opening for transferring (14) movable between an open position and a closed position, with the member for opening and for closing (68) being driven by a control lever (69) and a transmission system (70).

11. Ground coffee dispenser (5) according to claim 10, **characterised in that** means for controlling (84) are configured to ensure the starting of a motor (12) for driving the disc (10) when the control lever (69) is actuated.

12. Ground coffee dispenser (5) according to one of claims 1 to 11, **characterised in that** the inner wall (16) comprises at least one second rib (63-66) extending at least over the height thereof close to the peripheral space (32).

13. Coffee machine (1) comprising a ground coffee dispenser (5) according to any preceding claim.
